# EUROPÄISCHE PATENTSCHRIFT

(11) **EP 1 969 770 B1**
(45) Veröffentlichungstag und Bekanntmachung des Hinweises auf die Patenterteilung: **20.01.2010**
(21) Anmeldenummer: 06818117.1
(22) Anmeldetag: 29.11.2006
(51) Int. Cl.: H04L 12/28, H04L 12/56, H04B 10/207, H04Q 11/00

(54) **TELEKOMMUNIKATIONSGERÄT**
TELECOMMUNICATION DEVICE
APPAREIL DE TELECOMMUNICATION

(30) Priorität: 07.01.2006 DE 102006000940
(43) Veröffentlichungstag der Anmeldung: 17.09.2008
(73) Patentinhaber: Bktel Communications Gmbh, 41836 Hückelhoven-Baal (DE)
(72) Erfinder: MEYERS, Norbert, 41372 Niderkrüchten (DE)
(74) Vertreter: Vomberg, Friedhelm
(86) Internationale Anmeldenummer: PCT/DE2006/002099
(87) Internationale Veröffentlichungsnummer: WO 2007/079705

(56) Entgegenhaltungen:
- WO-A-00/33489
- WO-A-2004/064263
- WAN-KI PARK ET AL: "CONVERGENCE OF BROADCASTING AND COMMUNICATION IN HOME NETWORK USING AN EPON-BASED HOME GATEWAY AND OVERLAY" IEEE TRANSACTIONS ON CONSUMER ELECTRONICS, IEEE SERVICE CENTER, NEW YORK, NY, US, Bd. 51, Nr. 2, Mai 2005 (2005-05), Seiten 485-493, XP009085627 ISSN: 0098-3063
- WAN-KI PARK ET AL: "AN IMPLEMENTATION OF FTTH BASED HOME GATEWAY SUPPORTING VARIOUS SERVICES" IEEE TRANSACTIONS ON CONSUMER ELECTRONICS, IEEE SERVICE CENTER, NEW YORK, NY, US, Bd. 52, Nr. 1, Februar 2006 (2006-02), Seiten 110-115, XP009085864 ISSN: 0098-3063

## Beschreibung

Die Erfindung betrifft ein Telekommunikationsgerät mit einem Eingangsport und mit mehreren parallelen Ausgangsports, wobei zwischen dem Eingangsport und den Ausgangsports mindestens eine optische oder elektrische Signale verarbeitende Baugruppe und ein Switch angeordnet sind, wobei über einen integrierten Umschalter oder den Austausch einer Verbindungsleitung ein Mikrocontroller oder Netzwerkprozessor in den Datenpfad zwischen optischer oder elektrischer Signalverarbeitungsbaugruppe und Switch geschaltet ist, der als Layer 3 Switch arbeitet.

Ein solches Gerät ist prinzipiell aus der Veröffentlichung "WAN-KI PARK ET AL: "Convergence of broadcasting and communication in home network using an EPONbased home gateway and overlay", Mai 2005, IEEE, XP 009085627, bekannt.

Die Glasfaserübertragungstechnik gewinnt im Teilnehmeranschlussbereich zunehmend an Bedeutung. Schnellere Internetzugänge erfordern höhere Datenraten, die bis in die Häuser der Internet-Nutzer geführt werden. Bei den heute weit verbreiteten DSL Netzwerken werden die ursprünglich in zentralen Gebäuden vorgehaltenen DSLAMs (Digital Subscriber Line Access Multiplexer) weiter in die Nähe der Häuser gebracht, damit die nahezu unbegrenzte Datenübertragungskapazität der Glasfaserleitungen auf weniger Häuser aufgeteilt werden kann. Mit der ADSL-Technik werden die Glasfaserzubringer nach dem derzeitigen Stand der Technik bis auf 4 km an die Häuser herangeführt und nach optoelektrischer Wandlung über die sogenannte "Letzte Meile" mittels Telefonkupferleitung in die Haushalte verteilt. Die in den nächsten Jahren zur Einführung anstehende VDSL2-Technik steigert die symmetrische Datenrate pro Teilnehmer auf bis zu 100 Mbit/s, erfordert dann allerdings eine Telefonleitung die kürzer als 300 m ist, da ansonsten die Übertragungsrate adaptiv längenabhängig reduziert wird. Sind die zentralen DSLAMs über ein optisches Netzwerk flächendeckend so verteilt, dass jeder Haushalt über maximal 300 m Telefonkabel angebunden werden kann, so erfordert es keinen großen Aufwand, diese letzte Kupfermeile in einem weiteren Schritt durch ein optisches Netzwerk zu ersetzen, das bis in jeden Haushalt reicht. Wegen der hohen Betriebskosten dieser teilnehmernahen optischen DSLAM Vernetzung überspringt man in einigen Ländern den weiteren DSL Ausbau zugunsten eines FTTH (Fiber To The Home) Netzwerkes, welches direkt bis in jeden Kundenhaushalt reicht. Die Glasfaserübertragungstechnik arbeitet mit Wellenleiterkabeln, die mehrere Fasern enthalten, die ihrerseits einen Kern, einen Mantel und eine Beschichtung aufweisen. Der lichtführende Kern dient zur Signalübertragung. Die Beschichtung gewährleistet einen Schutz des Kerns vor mechanischen Beschädigungen. Der Mantel, der aus einer anderen Glasfaser als der Kern besteht, ist ebenfalls lichtführend, hat jedoch einen niedrigeren Brechungsindex, wodurch eine Totalreflektion und damit eine Lichtstrahlführung im Kern ermöglicht wird. Übliche Kerndurchmesser liegen bei 9 µm, übliche Manteldurchmesser bei 125 µm. Beschichtungen werden in einer Dicke von bis zu 1 mm verwendet. Die Verbindung zweier Lichtwellenleiterenden wird mittels eines Spleißgerätes vorgenommen. Dort werden die Enden durch Verschmelzen, beispielsweise unter einem Lichtbogen, miteinander verbunden. Damit diese Verbindungsstelle ausreichend gegen mechanische Belastungen wie Zug, Biegung, Korrosion und gegen Umwelteinflüsse geschützt werden kann, wird die (Spleiß)-Verbindung mit einem Schutzüberzug versehen, dem sogenannten "Spleißschutz". Für eine Aufteilung einzelner Signalstränge zu unterschiedlichen optischen Bauteilen werden ferner lösbare Steckverbinder verwendet, die aus zwei Lichtwellenleitersteckern bestehen, die üblicherweise mittels einer Führungskupplung miteinander verbunden werden. Bei einer Signalübertragung in einer solchen Steckverbindung muss gewährleistet sein, dass die beiden Fasern mit ihren Enden nahe zusammengeführt werden, um eine ungestörte Signalübertragung zu gewährleisten. Die Größe des Luftspaltes zwischen den beiden Faserstimflächen (Faserenden) bestimmt jedenfalls die Dämpfung.

Um die Aufbereitung der optische Signale, die Signalverteilung sowie die Signalwandlung (in elektrische Signale) zu bewerkstelligen, sind weitere Bauteile erforderlich, die nicht nur geordnet, sondern auch in einem Gehäuse verschlossen angeordnet werden sollen. Das beispielsweise in einem Wohnhauskeller ankommende Lichtwellenleiterkabel wird zu einem Gehäuse mit einem Eingangsport mit einem zugbelastungsresistenten Niederhalter verlegt, wobei vorsorglich Überlängen als Leitungsreserven vorgesehen werden. Grundsätzlich ist es nach dem Stand der Technik bekannt, in einem solchen Gehäuse entsprechende Lichtwellenleiter-Bandführungen, Spleißverbindungen, Steckeraufnahmen, Transceiver, Splitter und alle ansonsten notwendigen Bauteile anzuordnen.

Bei einem solchen Lichtwellenleiterkabel werden jedoch im Haus eine Fülle von Daten zur Verfügung gestellt, die wegen des hohen Gesamtpreises nicht von jedem Bewohner dieses Hauses gewünscht werden. Bis zu einer Freischaltung nach Vertragsabschluss ist es sogar wünschenswert, dass die Hausbewohner nicht unberechtigter Weise über vorhandene oder geschaffene Ausgangsports des Gehäuses eine Datennutzung schaffen.

Um einerseits einen hinreichenden mechanischen Schutz für die zwischen dem Eingangsport und dem Ausgangsport oder den Ausgangsports liegenden Baugruppen zu liefern, andererseits die Möglichkeit zu schaffen, eine Manipulation durch Unbefugte von vornherein zu vermeiden, wird in der DE 103 50 954 A1 ein Gehäuse vorgeschlagen, das auf einer Bodenplatteneinheit den Eingangsport, das Lichtwellenleiterband und mindestens einen optischen Steckverbinder als Schnittstelle fest montiert aufnimmt. Mindestens eine Baugruppe zur Signalverarbeitung ein oder mehrere Signalwandler zur Umformung der Signale sowie mindestens ein optischer Steckverbinder und die Ausgangsports sind in einer Gehäuseabdeckung angeordnet, die mit der Bodenplatteneinheit lösbar verbunden ist, vorzugsweise über eine Nut-Federverbindung und/oder einem Rast- oder Schnappverschluss. Aus nachstehend ausgeführten Gründen wird dieses Gehäuse nicht mehr allen sich heute stellenden Anforderungen in vollem Umfang gerecht, insbesondere dann, wenn mehrere optische Steckverbinder aufgenommen werden müssen.

Wegen der hohen Betriebskosten der teilnehmernahen optischen DSLAM-Vernetzung überspringt man in einigen Ländern den weiteren DSL-Ausbau zugunsten eines FTTH-Netzwerkes, welches direkt bis in jeden Kundenhaushalt reicht. Der Vorteil einer solchen Lösung besteht in der nahezu unbegrenzten Bandbreite und den damit verbundenen extrem hohen Standzeiten dieses reinen Glasfasemetzwerkes, das ohne wartungsintensive und Bandbreite schluckende aktive Elektronik im Feld auskommt. In Japan, Korea, Schweden und den USA werden bereits Millionen Haushalte direkt mit einem FTTH-Netzwerk versorgt. Internetzugangsgeschwindigkeiten von 100 Mbit/s bis 1.000 Mbit/s können preiswert realisiert werden. Im Wellenlängenmultiplex-Betrieb können zudem hunderte digitale und analoge Femsehkanäle preiswert und mit hoher Qualität direkt zu den Haushalten transportiert werden ohne die schnelle Datenübertragung zu beeinträchtigen.

Es sind inzwischen auch zentrale Ethernet-Switches mit optischen Schnittstellen entwickelt worden, die auf der zentralen Seite in der Regel in klimatisierten Räumen die Internet- und auch die Kabelfernsehsignale in die FTTH-Netzwerke einspeisen. Teilnehmerseitig gibt es ebenfalls eine breite Palette von Kommunikationsgeräten (CPE = customer premises equipment), die direkt an die optischen Leitungen des FTTH-Netzwerkes angeschlossen werden und nach optoelektrischer Wandlung die elektrischen Teilnehmerschnittstellen bereitstellen.

Bei den FTTH Netzwerken haben sich zwei Technologien durchgesetzt, die sich in den verwendeten Netzwerktopologien unterscheiden. Die Punkt zu Punkt (PtP) FTTH-Netzwerke binden jeden Kunden durch eine eigene Glasfaser an die Netzwerkzentrale an, während die Punkt zu Mehrpunkt- (PtM) Netzwerke über einen passiven optischen Splitter im Feld mehrere Glasfasern vom Kunden kommend auf eine Glasfaser zur Netzwerkzentrale konzentrieren (PON = passive optical networks).
Wegen des hohen Entwicklungsaufwandes haben sich die Hersteller in zwei Lager gespalten und entwickeln entweder Geräte für die PtP- oder die PtM-Netzwerke. Beide Übertragungstechniken haben abgängig von der zu versorgenden Bevölkerungsdichte und den zur Verfügung stehenden Räumen für die zentralen Kommunikationsgeräte ihre spezifischen Vor- und Nachteile. Derzeit haben sich die FTTH-Netzwerke in PtM-Topologie stärker verbreitet. Dies liegt insbesondere an dem vielfältigeren Angebot an Kommunikationsgeräten für diese Technik. Es besteht allerdings eine klare Tendenz, die erkennen lässt, dass es ein Nebeneinander beider FTTH-Netzwerktopologien geben wird. Einerseits wird es Länder geben, in denen zwar schwerpunktartig die eine oder andere Technologie bevorzugt wird, allerdings wird eine Mischung beider Technologien auf Landes- und Stadtebene durch die konkurrierenden Netzwerkbetreiber vorangetrieben. Demzufolge haben die Hersteller von Kommunikationsgeräten auch bereits damit begonnen, die zentralen Switches für beide Netzwerktechniken auszustatten. So entstehen modulare chassis-basierende Switches, in die optische Leitungskarten für beide Topologien eingeschoben werden können. In gemischter Bestückung kann eine zentrale Switch so hunderte optische Teilnehmerzugänge in beiden Netzwerktopologien speisen. Dies ermöglicht den Netzwerkbetreibern die jeweils kostengünstigste oder auch ausbaufähigste FTTH-Vemetzung aufzubauen, ohne dabei verschiedene Geräte unterschiedlicher Bauart einzusetzen. Diese Migration unterschiedlicher zentraler Kommunikationsgeräte hin bis zu universellen topologieunabhängigen Switches steigert die Flexibilität beim Netzwerkaufbau, reduziert die Gerätekosten wegen der höheren Stückzahlen und senkt gleichzeitig die Betriebskosten durch Reduzierung des Logistikaufwandes. Entgegen dieser Migrationstendenz bei den zentralen Kommunikationsgeräten sind derzeit lediglich CPEs für die eine oder andere Technik im Markt eingeführt. Für die Netzwerkbetreiber wäre es allerdings wünschenswert, wenn es Teilnehmer-Kommunikationsgeräte (CPE) gäbe, die sowohl für die PtP- als auch die PtM-FTTH-Netzwerke gleichermaßen einsetzbar wären.

Neben der Klassifizierung der CPEs bezüglich der unterstützten Netzwerktopologie gibt es auch Unterschiede in der eingesetzten Switch-Technologie. Die preiswerteren CPEs begnügen sich damit, nach der optoelektrischen Wandlung des von der Zentrale kommenden Ethernet-Datenstroms diesen über einen Ethernet-Layer 2 Switch zu leiten und an mehreren RJ45 LAN-Ports für den Kunden zugänglich zu machen. Diese switch-basierenden CPEs sind teilweise mit einem kleinen Mikrocontroller ausgestattet, der es erlaubt, Managementaufgaben zu realisieren. Im Gegensatz hierzu sind die router-basierenden Switches mit leistungsstarken Mikrocontrollern oder Netzwerkprozessoren ausgestattet, die über mehrere integrierte schnelle Recheneinheiten verfügen, die dann rechenintensive Aufgaben wie Routing, Datenverschlüsselung und VolP-Kodierung parallel ausführen. Diese CPEs haben neben der Layer 3 Switch viele nützliche Zusatzfunktionen wie integrierte Firewall, Telefonie über VolP, integrierter Wireless Accesspoint, Datenverschlüsselung und den VPN (virtual private network) Verbindungsaufbau.

Es ist Aufgabe der vorliegenden Erfindung ein Telekommunikationsgerät zu schaffen, dass einerseits geeignet ist, über optische bzw. elektrische Netzwerke in PtP- und/oder PtM-Topologie mit einer Netzwerkzentrale zu kommunizieren und andererseits die Möglichkeit schafft mit der preiswerten Switch Technik zu starten und diese im Bedarfsfall zur leistungsfähigeren Router Technik aufzurüsten.

Diese Aufgabe wird durch ein Telekommunikationsgerät nach Anspruch 1 gelöst. Dieses Telekommunikationsgerät ist vorzugsweise mehrteilig ausgebildet, wobei die einzelnen Module oder auch Gehäuseteile über Steckverbinder mechanisch, optisch und elektrisch lösbar verbunden sind.

Handelt es sich um ein optisches Telekommunikationsgerät, so ist es erforderlich die empfindliche Glasfaserleitungen in einem geschützten Bereich sicher aufnehmen. In einem ersten geschlossenen Gehäuseteil mit dem Eingangsport sind alle optischen Komponenten enthalten, insbesondere die ankommende gewickelte Glasfaser sowie entsprechende Halterungen hierfür und Verbindungsmittel, die zu einem Steckverbinder führen.

In einem ebenfalls geschlossenen zweiten Gehäuseteil sind alle Signalwandler und elektronischen Komponenten, die sowohl in switch- als auch in router-basierenden CPE-Einrichtungen enthalten sind. Die beiden Gehäuseteile sind jeweils als Modul ausgeführt und über einen Steckverbinder miteinander koppelbar. Vorzugsweise und zu einer Router-Technik aufrüstbar besitzt das Telekommunikationsgerät einen ebenfalls geschlossenen dritten Gehäuseteil, in dem alle allein router-basierenden Komponenten eines CPEs sowie gegebenenfalls zusätzliche PHYs enthalten sind. Wie später noch ausgeführt wird, kann durch Entnahme einer Verbindungsleitung und Aufsetzen eines dritten Gehäuseteils das anwenderseitige Telekommunikationsgerät von einer switch-basierenden Technik auf eine router-basierende Technik aufgerüstet werden. Neben der reinen Gerätetechnik ist hierzu erfindungsgemäß eine Aufteilung der elektronischen Bauteile und deren Kopplung erforderlich, so dass auch die gruppenweise Aufteilung der elektronischen Bauteile (ohne die Gehäuseausbildung) auf einer erfinderischen Tätigkeit beruht.

Weiterbildungen der Erfindung sind im Folgenden anhand der Zeichnungen beschrieben. Es zeigen:
- Fig. 1 und 2: jeweils schematische Ansichten elektronischer Schaltungen switchbasierender CPE-Lösungen in PtP- und PtM-Technik,
- Fig. 3 und 4: jeweils Schaltungsdiagramme router-basierender CPE-Lösungen in PtP- und PtM-Technik;
- Fig. 5 bis 10: jeweilige modulweise Aufteilungen der einzelnen elektronischen Bauteile auf verschiedene Module und
- Fig. 11 und 12: den prinzipiellen Aufbau eines zwei- oder dreiteiligen Gehäuses für ein Telekommunikationsgerät.

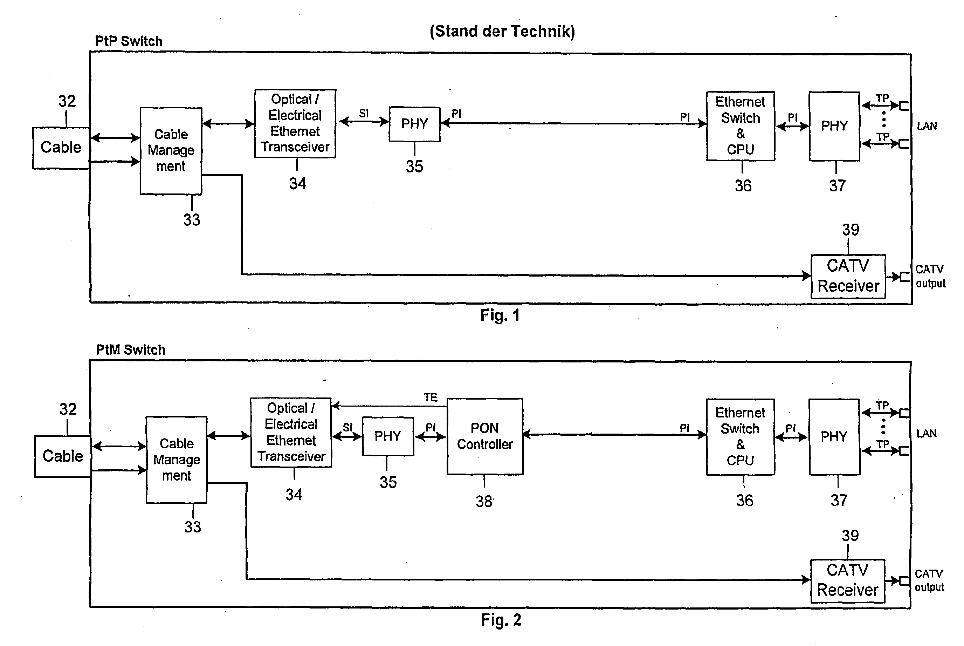

Anhand der Figuren 1 bis 4 kann der nach dem Stand der Technik bekannte Aufbau von switch- und router-basierenden CPEs erläutert werden.

Fig. 1 zeigt einen Blockschaltplan zu einem switch-basierenden CPE in PtP-Technik und Fig. 2 in PtM-Technik. Von der FTTH-Zentrale gelangt ein Glasfaserkabel 32 mit zwei Glasfasern über eine Punkt-zu-Punkt- oder Punkt-zu-Mehrpunkt-Verbindung in das CPE-Gehäuse.

Über eine integrierte Glasfasermanagementeinheit 33 gelangt die Ethernet-Signale führende Glasfaser an den optischen Ethemet-Transceiver 34, der die optischen Ethernetpakete in elektrische Pakete und umgekehrt wandelt. Der Transceiver 34 kommuniziert über seine serielle elektrische Schnittstelle (SI) mit dem angeschlossenen PHY-Baustein 35, der wiederum über eine parallele Schnittstelle PI mit der Ethernet-Switch und CPU-Einheit 36 verbunden ist, welche über PHY 37 mit einem oder auch mehreren LAN-Kundenports kommuniziert. An diese LAN-Ports kann der Kunde über Kategorie 3-7 Verbindungskabel PCs ans Ethernet anschließen.

Bei der PtM CPE (siehe Fig. 2) wird ein spezieller sogenannter burst-mode Ethemet-Transceiver eingesetzt, der die Ethemetpakete im Upstream - also in Richtung Zentrale - so steuert, dass die Ethernetpakete auf der gemeinsamen optischen Leitung hinter dem Splitter nicht kollidieren. Hierzu dient ein PON-Controller 38. Im Upstream teilen sich mehrere Telnehmer eine gemeinsame Glasfaser im Zeitmultiplex. Dies erhöht den Elektronikaufwand insbesondere bei hoher Upstream-Datenrate erheblich.

Über eine zweite Glasfaser erhält der integrierte CATV-Receiver 39 das breitbandige optische Kabelfernsehsignal, welches nach optoelektrischer Wandlung und Verstärkung an der Ausgangsbuchse anliegt. Hier kann der Kunde über ein Koaxialanschlußkabel Fernsehgeräte direkt anschließen. Schaltet man zwischen den CATV-Ausgang und Fernsehgerät eine Settop-Box, so können auch digitale Fernsehkanäle empfangen werden.

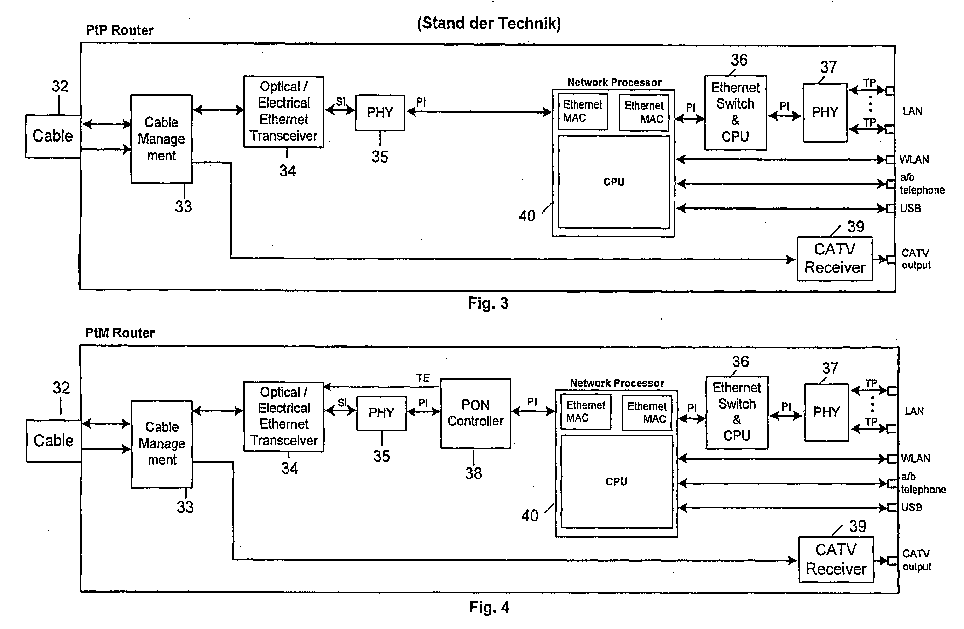

Bei den nach dem Stand der Technik bekannten router-basierenden CPEs nach Fig. 3 und 4 wird vor die Ethernet Switch 36 ein leistungsstarker Netzwerkprozessor 40 geschaltet, der die Layer 3-Vermittlungsfunktion hardwarenah mit hohem Durchsatz realisiert. Vorteilhaft an dieser Lösung sind die im gleichen Netzwerkprozessor realisierbaren Zusatzschnittstellen wie WLAN-Funkschnittstelle, USB- und analoge Telefonschnittstellen. Ansonsten sind gleiche Bauteile der CPE in Fig. 3 und 4 mit gleichen Bezugsziffern wie in Fig. 1 und 2 bezeichnet.

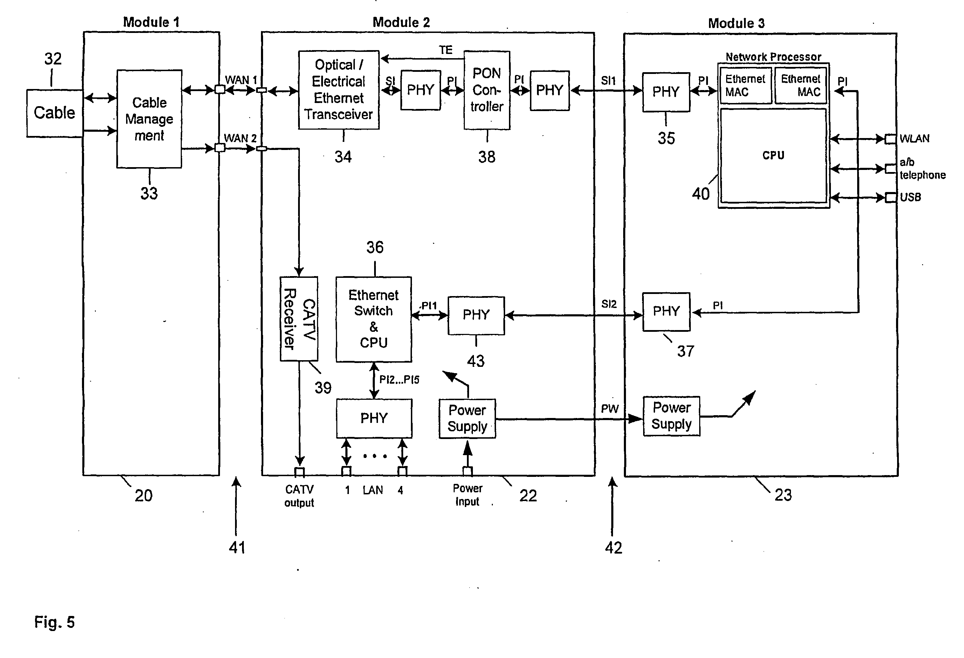

Fig. 5 bis 10 zeigen eine Aufteilung der elektronischen Komponenten auf Module 1, 2 und 3, die in Gehäuseteilen 20, 22 und 23 nebst Schnittstellen 41 und 42 angeordnet sind. Das Modul 2 enthält mit dem optischen Ethemet-Transceiver 34 und der teilnehmerseitigen Ethernet-Switch 36 alle Komponenten eines switch-basierenden PtP-FTTH-CPEs. Wird wie in Fig. 5 dargestellt der PON-Controler 38 ebenfalls integriert, so sind auch alle elektronischen Komponenten zur Realisierung eines PtM-CPEs vorhanden. Im Gegensatz zu den switch-baiserenden CPEs nach Fig. 1 und 2 besteht zwischen dem optischen Transreceiver 34 und der Ethernet-Switch 36 im Modul 2 keine Verbindung. Daraus folgt, dass das Modul 1 mit aufgestecktem Modul 22 noch keine funktionsfähige CPE-Lösung darstellt. Es ist jedoch ohne weiteres möglich, ein switch-basierendes CPE preisgünstig herzustellen, indem man die Anschlüsse SI1 und SI2 miteinander verbindet. Zum Aufrüsten auf ein router-basierendes CPE wird diese Verbindungsleitung entfernt und anstelle dessen das Modul 3 aufgesetzt, so dass hiernach die Module 1, 2 und 3 das router-basierende CPE bilden. In dieser Variante sind die Ethemet LAN Ports im Modul 2 enthalten. Im Übrigen entspricht diese Ausführungsform den CPEs nach Fig. 1 bis 4, so dass gleiche Komponenten mit gleichen Bezugszeichen versehen sind.

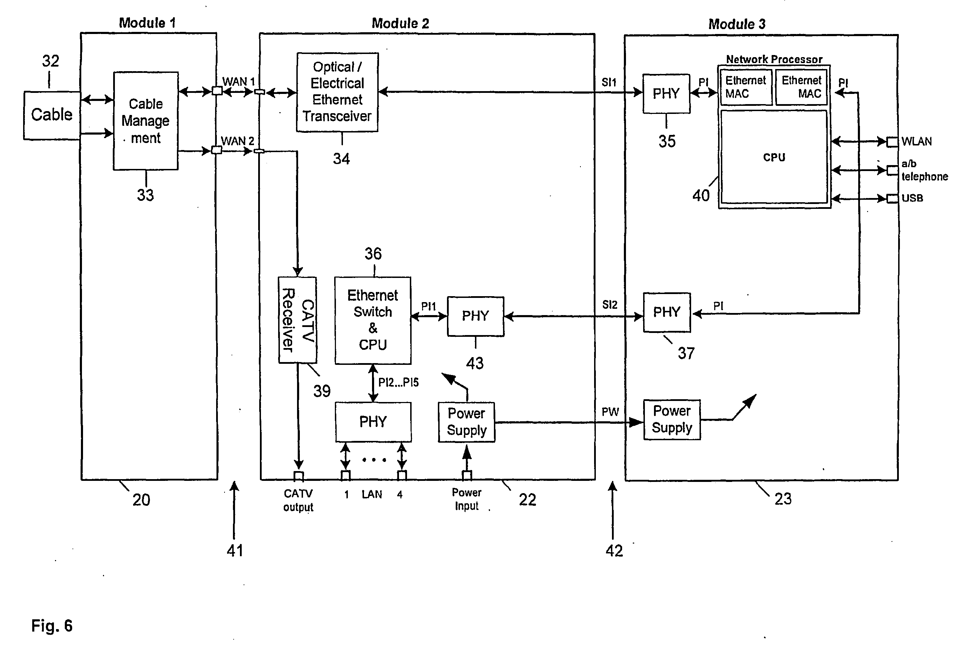

Während Fig. 5 die modulare Aufteilung von Elektronik und Mechanik eines PtM Telekommunikationsgerätes zeigt, wird in Fig. 6 die PtP Variante dargestellt.

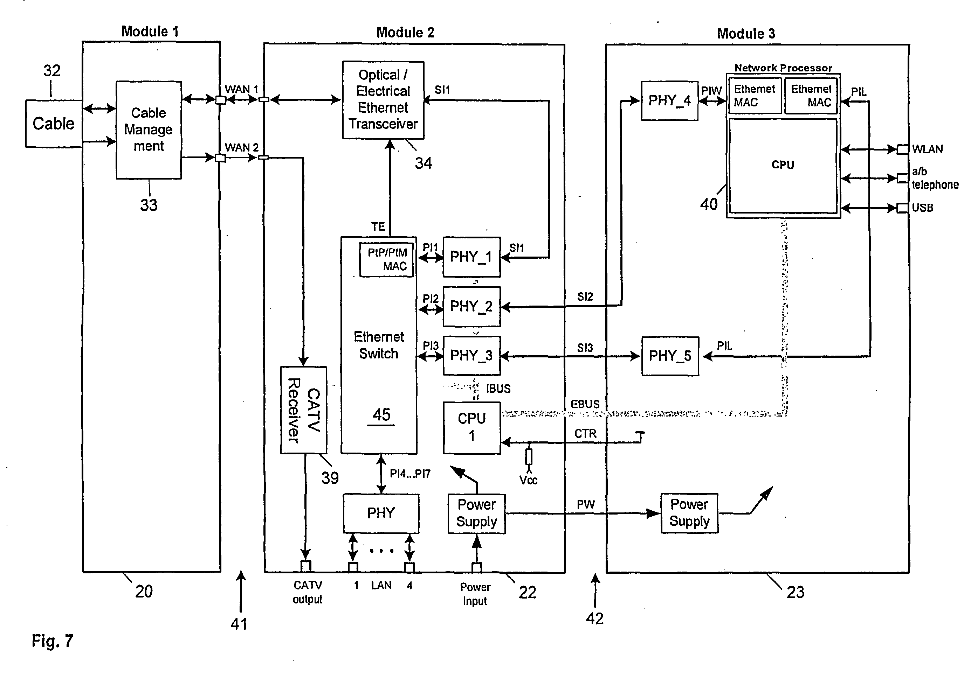

Eine alternative Lösung ist Fig. 7 zu entnehmen. Die ursprüngliche Ethernet Switch mit 5 Ethemet-Ports wurde durch eine Ausführungsvariante mit zwei zusätzlichen, das heißt insgesamt 7 Ports ersetzt. Hierdurch ergibt sich die Möglichkeit den optischen Ethernet-Transceiver 34 über SI1 und PHY_1 und die beiden Ethernet-Ports des Routers in Modul 3 über SI2 und PHY_2 und SI3 und PHY_3 direkt an die Ethernet-Switch 45 anzuschließen. Ohne das Modul 3 ergibt sich ein voll funktionsfähiges switch-basierendes CPE für PtP- und PtM-Lösungen. Die in diesem Fall nicht benötigten PHY_2 und PHY_3 können von der integrierten CPU funktionell abgeschaltet oder sogar von der Stromversorgung getrennt werden, was den Leistungsverbrauch reduziert. Wird jetzt das Modul 3 und damit die Router- Baugruppe über die elektrische Schnittstelle angedockt, wechselt der Pegel auf der Steuerleitung CTR von High auf Low und informiert die CPU 1 über die Verbindung zum Router-Modul. Zunächst sind PHY_2 und PHY_3 abgeschaltet. Um die switch-basierende in eine router-basierende CPE umzuwandeln sind jetzt einige Schritte notwendig, die von der CPU 1 durchgeführt werden: Die Ports der Ethernet-switch 45 müssen zunächst so in zwei VLANs umprogrammiert werden, dass zwei getrennt arbeitende virtuelle Switches entstehen. Die Ports werden so umprogrammiert, dass Port PI1 und PI2 VLAN_1 und die verbleibenden Ports PI2 bis PI7 VLAN_2 bilden. Nun können Ethemetpakete vom WAN über den optischen Transceiver 34 und die PHY_1 an den ersten Port PI1 des VLAN_1 gelangen. Da das VLAN_1 lediglich zwei Ports besitzt, werden alle Pakete zwischen diesen Ports ausgetauscht. Über die Switch gelangen die Pakete auf Port PI2, der ebenfalls zum VLAN_1 gehört. Da alle anderen Switch-Ports zum VLAN_2 gehören, können die Ports PI1 und PI2 nicht mit diesen Ports kommunizieren, was auch zwingend erforderlich ist, da der Router ja zwischen WAN und LAN-Ports auf Layer 3 vermitteln muss.

Die Ethernet-Switch 45 in Modul 2 besitzt 7 Ethemet-Ports, die alle als sogenannte "Tri-speed"-Ports ausgelegt sind. Diese Ports arbeiten mit den drei Ethernet-Datenraten von 10, 100 und 1000 Mbit/s und können über die standardisierte Auto-Negotiation-Funktion die Datenrate und andere Parameter automatisch mit den verbunden Partnerports aushandeln. Schließt der Anwender an einen der vier LAN-Ethemet-Ports den GE-Port eines Desktop PCs an, so handeln die beiden Link-Partner die höchst mögliche Rate von 1000 Mbit/s aus und stellen die Ethemet-Bausteine auf diese gemeinsame Datenrate ein. Kann der Router-Mikrocontroller von Modul 3 lediglich Fast Ethernet an den Schnittstellen SI2 und SI3 bereitstellen, dann stellt die Ethernet-Switch 36 auf Modul 22 seine Ports PI2 und PI3 entsprechend auf 100 Mbit/s ein. Wird später das Modul 23 durch einen Router mit Gigabit Ethemet ersetzt, dann wechselt die Ethernet-Switch automatisch auf die höhere Datenrate.

Die Lösung in Fig. 7 soll sowohl die PtP als auch die PtM Technik unterstützen. Derzeit sind keine Ethernet Switch Bausteine bekannt, die beide Technologien unterstützen. Standard Ethemet Switches sind entweder für PtP oder PtM (PON) Netzwerke entwickelt und besitzen keine MACs, die beide Technologien unterstützen. Hier soll die Ethernet-Switch 45 eine solche universelle Mac enthalten, die entweder von der CPU 1 gesteuert oder adaptiv zwischen PtP und PtM Betrieb umschaltet. Zur adaptiven Umschaltung werden die über PI1 empfangenen Ethemetpakete von der Ethemet Switch 45 analysiert und festgestellt, ob ein PtP oder PtM Netzwerk angeschlossen ist. Hiervon abhängig werden die Pakete dann von der PtP oder PtM MAC verarbeitet. Handelt es sich um ein PtM Netzwerk, dann generiert die PtM MAC das Steuersignal TE welches den Lasersender im optischen Transceiver 34 zeitrichtig ein- bzw. ausschaltet, so dass der Zeitmultiplexbetrieb im Upstream ohne Kollisionen funktioniert. Das TE Signal schaltet im PtP Betrieb den Lasersender dauerhaft ein. Mit der heutigen Halbleitertechnik ist es möglich einen Ethernet Switch Baustein mit einer oder auch mehreren umschaltbaren PtP / PtM MACs auf einem Chip zu integrieren.

Neben der PtP / PtM Funktionalität des Ethernet Switches 45 ist auch ein multifunktionaler optischer Transceiver 34 erforderlich. Erste integrierte Schaltkreise für einen PtP / PtM optischen Transceiver sind bei den Halbleiterherstellern in der Planung.

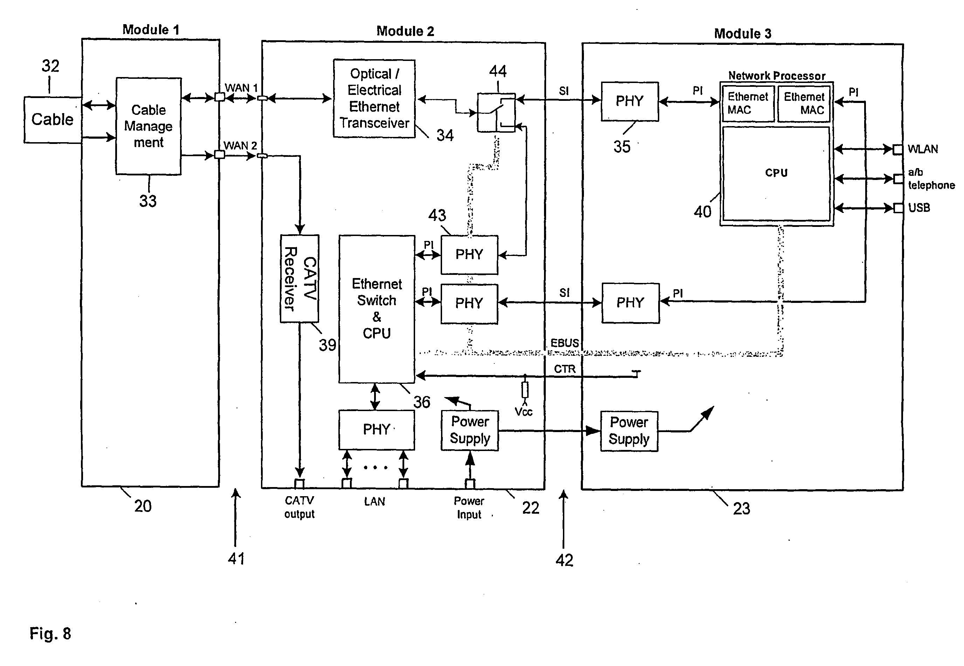

Die Ausführungsform nach Fig. 8 entspricht im Wesentlichen der Ausführungsform nach Fig. 6 mit der Maßgabe, dass im Modul 2 ein zusätzlicher elektronischer Schalter 44 eingebaut ist, der je nach dem, ob das Modul 3 aufgesetzt ist oder nicht, eine switch-basierende Verbindung schaltet. Demzufolge besitzt das Modul 2 auch eine Ethernet-Switch 36 mit integrierter CPU-Einheit, die den Schalter in Abhängigkeit vom Steuersignal CTR umschaltet.

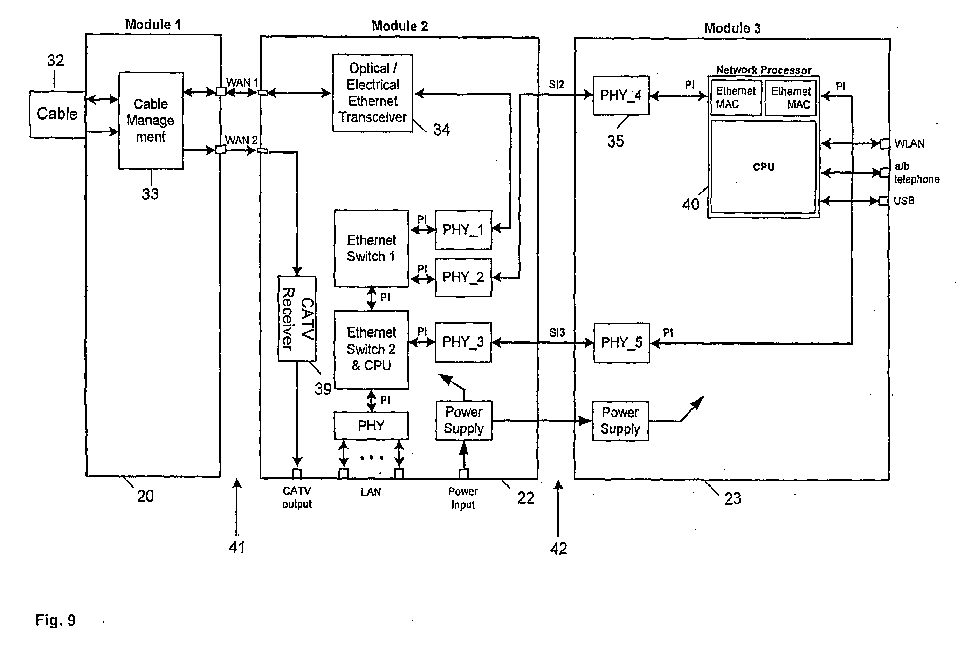

Die Lösung nach Fig. 9 entspricht der Ausführungsform nach Fig. 7 mit der Maßgabe, dass anstelle eines Ethemet-Switches 36 nunmehr ein Ethernet-Switch 1 und eine Ethernet-switch 2 und CPU-Einheit verwendet werden.

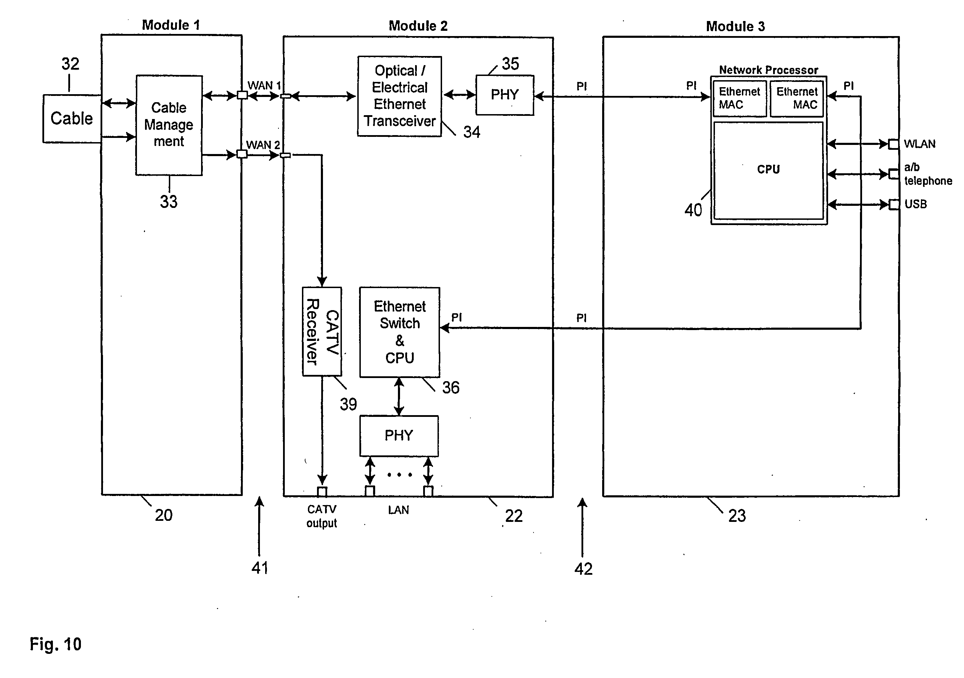

Die Ausführungsform nach Fig. 10 entspricht der Ausführungsform nach Fig. 6 mit der Maßgabe, dass die elektrische Schnittstelle 42 zwischen Modul 2 und Modul 3 als Parallelschnittstelle ausgeführt ist und deswegen die PHY 37 und PHY 43 entfallen und die PHY 35 in das Modul 2 integriert ist.

Aufgrund des starken Preisverfalls von Gigabit Ethemet Optik Transceivem und Switches ist es vorteilhaft alle Komponenten des Modul 2 für Gigabit Ethemet (GE) auszulegen. Damit bilden das Modul 1 und das Modul 2 zusammen eine switch-basierende Gigabit Ethernet CPE, die eine deutlich längere Standzeit im Netzwerk ermöglicht. Wegen des derzeit sehr hohen Preises für Layer 3 Netzwerkprozessoren wird Modul 3 zunächst als Fast Ethemet Router ausgelegt. Die elektrische Schnittstelle 42 ist allerdings Gigabit Ethemet-fähig. Sobald Gigabit Ethemet-Router preiswert realisierbar sind, kann in dieser modularen Lösung über einen Austausch des Moduls 3 das CPE auf Gigabit Ethemet Routing aufgerüstet werden. Bei Geräten, die nach dem derzeitigen Stand der Technik arbeiten, müssen beim Aufrüsten auf Gigabit Ethernet auch alle Komponenten von Modul 2 ersetzt werden. Es ist sehr schwierig eine verlässliche Aussage über Standzeiten von Kommunikationsgeräten in Netzwerken zu geben. Dennoch ist die Wahrscheinlichkeit hoch, dass das Modul 1 mit der fast unbegrenzten Bandbreite von ein oder zwei Singlemode Glasfasern eine Standzeit von mehr als 50 Jahren erreichen wird. Das Modul 2, welches beim privaten Endkunden eingesetzt wird und das mit einem integrierten switch-basierenden CPE in Gigabit Ethemet arbeiten sollte, dürfte eine Standzeit von mehr als 20 Jahren haben. Die Standzeit des Moduls 3 ist heute schwierig abzuschätzen, da ein stetiger Wandel der teilnehmerseitigen Schnittstellen zu erwarten ist. Zudem werden abhängig von der Käuferschicht die Anforderungen an dieses Modul sehr individuell wachsen. Dennoch scheint eine Standzeit von 5 bis 10 Jahren realistisch.

Erfindungsgemäß werden die sehr langlebigen passiven Fibermanagementkomponenten 33 in Modul 1 und die langlebigen aktiven Elektronikkomponenten in Modul 2 verlagert und so mit optischen und elektrischen Schnittstellen 41, 42 versehen, dass ein schneller und preiswerter Austausch oder eine Aufrüstung möglich ist. Durch die Integration der längerlebigen Elektronikkomponenten in das Modul 2 wird der Preis des Moduls 3 gemindert. Dies kann durchaus den schnelleren Austausch des Moduls 3 fördern, wenn neue Teilnehmer-Anschlußtechnologien auf den Markt drängen.

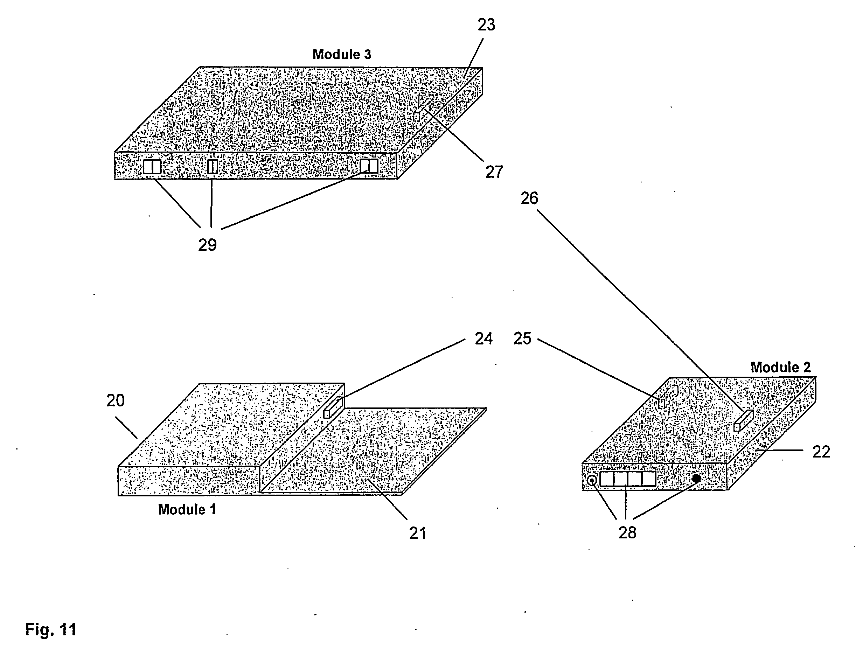

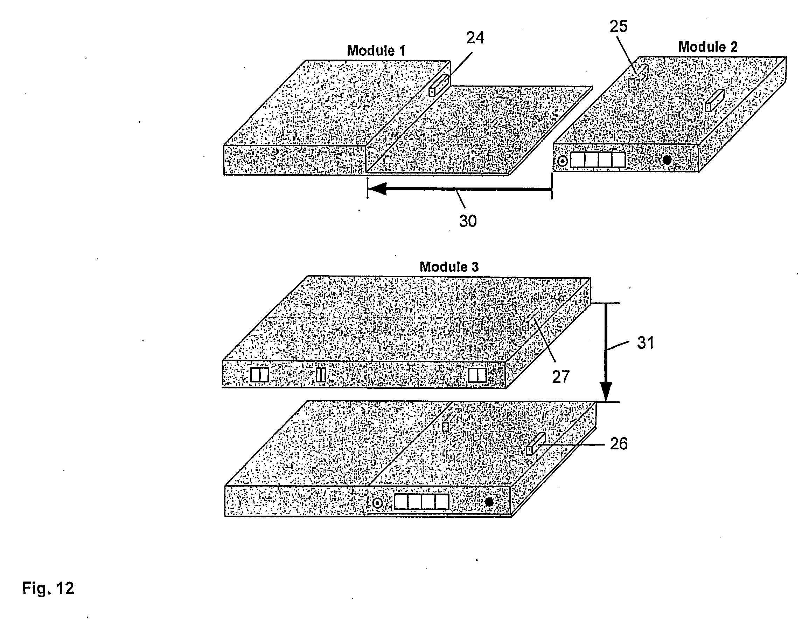

Fig. 11 und 12 zeigen einen prinzipiellen Aufbau der vorbeschriebenen Module 1, 2 und 3 in Gehäuseteilen 20, 22 und 23.

Aus Fig. 11 und 12 geht hervor, dass ein erster Gehäuseteil 20 aus einem quaderförmigen Modul 1 besteht, das eine seitlich auskragende Grundplatte 21 besitzt, deren überkragender Teil als Auflage- oder Anlagefläche für das zweite, ebenfalls zumindest im wesentlichen quaderförmige Gehäuseteil 22 (als Modul 2) dient. Das dritte Modul 23 besteht ebenfalls aus einem quaderförmigen Gehäuse, das etwa die Grundflächenausmaße der zusammengesteckten Module 1 und 2 besitzt. Modul 1 ist mit Modul 2 über einen Stecker 24 sowie eine Buchse 25, die zusammen eine optische Steckverbindung ergeben, kuppelbar. Eine entsprechende Verbindung des Moduls 2 zu dem Modul 3 liefert der Stecker 26, der in die unterseitig angeordnete Buchse 27 eingeführt werden kann. Die Module 2 und 3 besitzen diverse Ausgangsports 28 bzw. 29 zum Anschluss anwenderspezifischer Geräte.

Fig. 12 zeigt im oberen Teil wie das Modul 2 durch Längsverschiebung entlang des Pfeils 30 mit Modul 1 koppelbar ist, wobei die Steckverbindung 24, 25 zur Datenübertragung hergestellt wird. Auf diese Einheit kann das Modul 3 durch Bewegung entlang der Richtung 31 aufgesetzt werden, wobei die Verbindung 26, 27 hergestellt wird. Das Modul 1 dient als Fasermanagement Box, die selbst durch einen Deckel verschlossen und versiegelt werden kann. In dieser Box können eine oder auch mehrere Glasfaserkabel durch Öffnungen eingeführt und im Innern der Box befestigt werden. Eine oder mehrere Glasfasern werden in der Box in einem besonders geschützten Bereich unter Einhaltung der erforderlichen Biegeradien geführt. Glasfaserstecker können direkt oder über Spleiße mit den Glasfasern verbunden werden. Glasfaserspleißverbindungen können in einem Spleißhalter gesichert abgelegt werden, wie dies prinzipiell nach dem Stand der Technik bekannt ist. Der oder die Glasfaserstecker oder auch Bändchenstecker mit bis zu 12 Glasfasern werden in eine in der Box befindlichen optischen Kupplung eingesteckt. Die zweite Öffnung der Kupplung befindet sich an einer Seitenwand des Moduls 2 und dient später zum optischen Andocken. Die Grundplatte 21 geht über das Modul 1 hinaus und kann Schiebestege aufweisen, auf die das Modul 2 aufgeschoben werden kann.

Während das Modul 1 lediglich passive optische Komponenten aufnimmt, werden in dem Modul 2 die Signalwandler zur Wandlung zwischen optischen und elektrischen Signalen angeordnet. Die weiteren Einheiten, die das Modul 2 erfingdungsgemäß aufnimmt, werden in einem Blockdiagramm später erläutert. Nach optischer und elektrischer Signalwandlung und -verarbeitung werden die elektrischen Signale auf einen Steckverbinder geführt, der senkrecht oder auch im Winkel von 90° durch den Deckel des Modul 2-Gehäuses ragt. Dieser elektrische Steckverbinder wird beim Aufsetzen oder Aufklappen des Moduls 3 automatisch mit seinem Gegenpart verbunden. Im Modul 3 wird eine Leiterkarte (PCB) eingebaut, die den Router-Netzwerkprozessor, die Daten- und Programmspeicher und die Bauteile für die Kundenschnittstellen verdrahtet.
Die vorliegende Erfindung hat folgende Vorteile gegenüber dem bisherigen Stand der Technik:
1. Universelles CPE mit Unterstützung der PtP und PtM Glasfasertopologien in einem modularen Elektronik- und Gehäusekonzept.
2. Kostengünstiger Start als switch-basierendes CPE mit Gigabit Ethernet.
3. Einfaches Aufstecken eines Moduls ermöglicht die Aufrüstung auf Fast- und auch Gigabit Ethemet Router. Erstinvestitionen in Modul 20 und 22 bleiben voll erhalten.
4. Einfache Mechanik und automatische optische bzw. elektrische Schnittstellensteckverbinder ermöglichen den Kunden die Module 22 und 23 selbst zu montieren.
5. Durch den dreiteiligen modularen Aufbau von Elektronik und Gehäuse werden längere Standzeiten der Einzelkomponenten erzielt.
6. Universelles modulares CPE bietet eine Managementoberfläche für alle CPE-Typen wie switch- bzw. router-basierende CPEs in PtP oder auch PtM Technik.
7. Geringere Logistik- und Schulungskosten, da die Module 20 und 23 für alle CPE-Typen gleich sind. Wird Modul 22 als PtP und PtM CPE realisiert, so ist es ebenfalls universell einsetzbar und führt zur weiteren Kostenreduktion in Netzen mit gemischten Topologien.
8. Modul 22 ist für switch- und router-basierende CPEs in Fast und Gigabit Ethemet-Technik einsetzbar.
9. Die Frontflächen von Modul 22 und Modul 23 bieten zusammen mehr Platz für Kundenschnittstellen.
10. Die empfindlichen Glasfasern und Spleiße sind in Modul 20 sicher getrennt von den restlichen Systemkomponenten.

### Abkürzungen:

- ADSL: Asymmetric Digital Subscriber Line
- CATV: Community Antenna Television
- CPE: Customer Premises Equipment
- CPU: Central Processing Unit
- DSLAM: Digital Subscriber Line Access Multiplexer
- FTTH: Fiber To The Home
- GE: Gigabit Ethernet
- IP: Internet Protocol
- LAN: Local Area Network
- MAC: Media Access Control
- PCB: printed Circuit Board
- PHY: Physical (Layer)
- PI: Parallel Interface
- PON: Passive Optical Network
- PtP: Point to Point
- PtM: Point to Multipoint
- SI: Serial Interface
- VDSL: Very High Data Rate Digital Subscriber Line
- VLAN: Virtual Local Area Network
- VoIP: Voice Over Internet Protocol
- VPN: Virtual Private Network
- WAN: Wide Area Network
- WLAN: Wireless Local Area Network

## Patentansprüche

1. Telekommunikationsgerät mit einem Eingangsport für ein lichtwellenleitendes oder elektrisches Kabel und mit mehreren parallelen Ausgangsports, wobei zwischen dem Eingangsport und den Ausgangsports mindestens eine optische oder elektrische Signale verarbeitende Baugruppe und ein Switch angeordnet sind, wobei über einen integrierten Umschalter oder den Austausch einer Verbindungsleitung ein Mikrocontroller oder Netzwerkprozessor in den Datenpfad zwischen optischer oder elektrischer Signalverarbeitungsbaugruppe und Switch geschaltet ist, der als Layer 3 Switch arbeitet, **dadurch gekennzeichnet, dass** die optische oder elektrische Signale verarbeitende Baugruppe, der Umschalter und der Switch sich automatisch oder manuell an die angeschlossene Glasfasertopologie in Point-to-Point PtP- oder Point-to-Multi-Point PtM- Technik adaptieren.

2. Telekommunikationsgerät nach Anspruch 1, **dadurch gekennzeichnet, dass** die optische oder elektrische Signale verarbeitende Baugruppe, der Umschalter und der Switch auch mit einer höheren umschaltbaren Datenrate arbeiten als der Netzwerkprozessor in seiner Funktion als Layer 3 Switch.

3. Telekommunikationsgerät nach Anspruch 1 und 2, **dadurch gekennzeichnet, dass** die Umschaltung zwischen Layer 2 und Layer 3 Betrieb zu jeder Zeit auch dynamisch und synchron zwischen zwei Datenpaketen erfolgt.

4. Telekommunikationsgerät nach einem der Ansprüche 1 bis 3, **gekennzeichnet durch** ein Gehäuse, das in einem ersten geschlossenen Gehäuseteil (20) mit einem Eingangsport (32) alle optischen oder elektrischen Komponenten enthält und das in einem zweiten, ebenfalls geschlossenen Gehäuseteil alle Signalwandler und elektronischen Komponenten enthält, die sowohl in switch- als auch in router-basierenden CPE-Einrichtungen benötigt werden.

5. Telekommunikationsgerät nach Anspruch 4, **dadurch gekennzeichnet, dass** in einem dritten, ebenfalls geschlossenen Gehäuseteil ( 23) alle Komponenten eines allein router-basierende CPEs sowie gegebenenfalls zusätzliche PHYs enthalten sind.

6. Telekommunikationsgerät nach Anspruch 4 oder 5, **dadurch gekennzeichnet, dass** die Gehäuseteile (20, 22, 23) über einen aus einer Seitenwand herausragenden Stecker (24, 26), der in eine korrespondierend ausgebildete Buchse (25, 27) greift, elektrisch und optisch miteinander verbunden sind.

7. Telekommunikationsgerät nach Anspruch 6, **dadurch gekennzeichnet, dass** das erste Gehäuseteil (20) im wesentlichen quaderförmig ist, allerdings über eine seitlich auskragende Grundplatte (21) verfügt, deren überkragender Teil als Auflage- oder Anlagefläche für das zweite, ebenfalls zumindest im wesentlichen quaderförmigen Gehäuseteils (22) dient.

8. Telekommunikationsgerät nach Anspruch 7, **dadurch gekennzeichnet, dass** das dritte Gehäuseteil (23) ebenfalls zumindest im wesentlichen quaderförmig ausgebildet ist und auf die aneinander liegenden, mit einander verbundenen Gehäuseteile aus erstem und zweitem Gehäuseteil (20, 22) aufgesetzt und über eine Stecker-Buchse-Verbindung (26, 27) elektrisch miteinander gekuppelt ist.

9. Telekommunikationsgerät nach einem der Ansprüche 4 bis 8, **dadurch gekennzeichnet, dass** mit einem optischen Ethemet-Transceiver (34) ein PON-Controller 38 gekoppelt ist, der es ermöglicht ein passives optisches Netzwerk für ein Punkt-zu-Mehrpunkt-Netzwerk (PtM) über die optische WAN 1 Leitung anzubinden.

10. Telekommunikationsgerät nach einem der Ansprüche 4 bis 9, **dadurch gekennzeichnet, dass** das zweite Gehäuseteil (22) alle für eine switch-basierende CPE-Einheit und die Signalverarbeitung erforderlichen Bauteile und Ein- / Ausgangsports aufweist, so dass der erste und zweite Gehäuseteil ein vollfunktionsfähiges Gerät ergeben, dass auf ein routerbasierendes CPE durch Aufsetzen des Gehäuseteils (23) aufrüstbar ist.

## Claims

1. Telecommunication device with an inlet port for a light wave guide cable or an electric cable and with several parallel outlet ports, whereby at least one component which processes optical or electric signals and a switch are arranged between the inlet port and the outlet port, whereby a microcontroller or net work processor is switched in the data path between the optical or electric signal processing component and the switch by means of an integrated changeover switch or the exchange of the connection line, said switch operating as a layer 3 switch,
**characterised in that**
the component which processes optical or electric signals, the changeover switch and the switch adapt themselves automatically or manually to the connected fibre glass topology in point to point (PtP) - or point to multi-point (PtM)-technics.

2. Telecommunication device according to claim 1, **characterised in that** the component which processes optical or electric signals, the changeover switch and the switch operate at higher switchable data transfer rate than the net work processor in its function as layer 3 switch.

3. Telecommunication device according to claim 1 or 2, **characterised in that** the changing over from layer 2 to layer 3 operation is effected even dynamically and synchronously between two data packets.

4. Telecommunication device according to one of the claims 1 to 3, **characterised by** a housing that contains in a first closed housing part (20) with an inlet port (32) all optical or electric components and that contains in a second, also closed housing part all signal converter and electronic components, which are necessary both in switch and in router-based CPE-arrangements.

5. Telecommunication device according to claim 4, **characterised in that** in a third, also closed housing part (23) all components of an only router-based CPEs as well as, if necessary, additional PHYs are enclosed.

6. Telecommunication device according to claim 4 or 5, **characterised in that** the housing parts (20, 22, 23) are connected optically and electrically one to the other by a male connector plug (24, 26) which protrudes one of the side walls and which engages in a correspondent designed female connector (25, 27).

7. Telecommunication device according to claim 6, **characterised in that** the first housing part (20) is essentially cuboid, but has a base plate (21) projecting laterally and which laterally projecting part supports as a bearing or locating surface for the second also at least essentially cuboid housing part (22).

8. Telecommunication device according to claim 7, **characterised in that** the third housing part (23) is formed at least essentially cuboid and is attached onto the housing parts consisting of the first and the second housing part (20, 22) located and connected to one another and connected electrically by a male-female-plug connection (26, 27).

9. Telecommunication device according to one of the claims 4 to 8, **characterised in that** an optical Ethernet-transceiver (34) is connected to a PON-controller (38) which allows to connect a passive optical net work for a point-to-Multi-point-net work (PtM) via the optical WAN 1-line.

10. Telecommunication device according to one of the claims 4 to 9, **characterised in that** the second housing part (22) comprises all components which are necessary for a switch-based CPE-unit and the signal processing, and the inlet-/outlet ports, so that the first and the second housing part form a completely functioning device that can be upgraded to a router-based CPE by attaching the housing part (23).

## Revendications

1. Appareil de télécommunication comprenant un port d'entrée pour un câble à fibres optiques ou un câble électrique ainsi que plusieurs ports de sortie parallèles, entre ledit port d'entrée et lesdits ports de sortie étant disposés au moins un ensemble traitant des signaux optiques ou électriques ainsi qu'un switch, un micro-contrôleur ou un processeur de réseau étant monté, par l'intermédiaire d'un commutateur intégré ou par l'échange d'une ligne de connexion, dans le chemin de données entre l'ensemble de traitement de signaux optiques ou électriques et le switch qui fonctionne en tant que switch de niveau 3, **caractérisé par le fait que** ledit ensemble traitant des signaux optiques ou électriques, ledit commutateur et ledit switch s'adaptent de façon automatique ou manuelle à la topologie connectée à fibres de verre en technique point-à-point (PtP) ou point-à-multipoint (PtM).

2. Appareil de télécommunication selon la revendication 1, **caractérisé par le fait que** ledit ensemble traitant des signaux optiques ou électriques, ledit commutateur et ledit switch travaillent aussi avec un débit de données commutable plus élevé que le processeur de réseau dans sa fonction de switch de niveau 3.

3. Appareil de télécommunication selon la revendication 1 et 2, **caractérisé par le fait que** la commutation entre le service de niveau 2 et le service de niveau 3 se fait en tout temps également de manière dynamique et synchrone entre deux paquets de données.

4. Appareil de télécommunication selon l'une quelconque des revendications 1 à 3, **caractérisé par** un boîtier qui, dans une première partie de boîtier fermée (20) avec un port d'entrée (32), comprend tous les composants optiques ou électriques et qui, dans une deuxième partie de boîtier, elle aussi fermée, comprend tous les convertisseurs de signaux et composants électroniques qui sont requis aussi bien dans les équipements CPE à base de switch que dans ceux à base de routeur.

5. Appareil de télécommunication selon la revendication 4, **caractérisé par le fait qu'**une troisième partie de boîtier (23), elle aussi fermée, comprend tous les composants d'un CPE uniquement à base de routeur ainsi que, le cas échéant, des PHY supplémentaires.

6. Appareil de télécommunication selon la revendication 4 ou 5, **caractérisé par le fait que** lesdites parties de boîtier (20, 22, 23) sont reliées entre elles de façon électrique et optique par le biais d'un connecteur mâle (24, 26) qui fait saillie d'une paroi latérale et qui s'engage dans un connecteur femelle (25, 27) réalisé de manière correspondante.

7. Appareil de télécommunication selon la revendication 6, **caractérisé par le fait que** ladite première partie de boîtier (20) présente une forme pour l'essentiel parallélépipédique, mais présente une plaque de base (21) faisant saillie latéralement dont la partie en saillie sert de surface de logement ou d'appui à ladite deuxième partie de boîtier (22) qui, elle aussi, présente une forme au moins pour l'essentiel parallélépipédique.

8. Appareil de télécommunication selon la revendication 7, **caractérisé par le fait que** ladite troisième partie de boîtier (23) présente, elle aussi, une forme au moins pour l'essentiel parallélépipédique et est posée sur les parties de boîtier constituées par lesdites première et deuxième parties de boîtier (20, 22) s'appliquant l'une contre l'autre et reliées entre elles, et est couplée électriquement à celles-ci par l'intermédiaire d'une connexion mâle-femelle (26, 27).

9. Appareil de télécommunication selon l'une quelconque des revendications 4 à 8, **caractérisé par le fait qu'**un contrôleur de PON 38 est couplé à un récepteur-émetteur optique d'Ethernet (34), ce premier permettant de connecter un réseau optique passif pour un réseau point-à-multipoint (PtM) via la ligne WAN 1 optique.

10. Appareil de télécommunication selon l'une quelconque des revendications 4 à 9, **caractérisé par le fait que** ladite deuxième partie de boîtier (22) comprend tous les composants nécessaires à une unité CPE à base de switch et au traitement de signaux ainsi que les ports d'entrée/de sortie, de sorte que lesdites première et deuxième parties de boîtier forment un appareil entièrement opérationnel qui, en appliquant ladite partie de boîtier (23), peut être étendu de manière à former un CPE à base de routeur.
